# EUROPEAN PATENT SPECIFICATION

(11) **EP 1 187 538 B1**
(45) Date of publication and mention of the grant of the patent: **24.05.2006**
(21) Application number: 00936859.8
(22) Date of filing: 31.05.2000
(51) Int. Cl.: A23L 1/105, A23L 1/164, A23L 1/211

(54) **CEREAL PRODUCTS HAVING LOW PHYTIC ACID CONTENT**
GETREIDEPRODUKTE MIT NIEDRIGEM PHYTINSÄUREGEHALT
PRODUITS A BASE DE CEREALES AVEC UNE TENEUR EN ACIDE PHYTIQUE REDUITE

(30) Priority: 31.05.1999 EP 99110467
(43) Date of publication of application: 20.03.2002
(73) Proprietor: Société des Produits Nestlé S.A., 1800 Vevey (CH); ETH Zurich Laboratory for Human Nutrition, 8803 Rüschlikon (CH)
(72) Inventor: BARCLAY, Denis, CH-1321 Arnex-sur-Orbe (CH); DAVIDSSON, Lena, CH-8001 Zürich (CH); EGLI, Ines, Swiss Fed. Inst. of Technology Zürich, 8803 Rüschlikon (CH); HURRELL, Richard, CH-8118 Pfaffhausen (CH); JUILLERAT, Marcel, Alexandre, 1000 Lausanne 26 (CH)
(74) Representative: Dixon, Sarah
(86) International application number: PCT/EP2000/005140
(87) International publication number: WO 2000/072700

(56) References cited:
- WO-A-98/11788
- US-A- 5 904 942
- X.S. ZHU: "Preparation of a Low-Phytate Feed Mixture and Bioavailability of its Phosphorus to Chicks" ANIMAL FEED SCIENCE AND TECHNOLOGY., vol. 27, no. 4, 1990, pages 341-351, XP002120644 AMSTERDAM., NL
- DATABASE CHEMABS [Online] CHEMICAL ABSTRACTS SERVICE, COLUMBUS, OHIO, US; 1997 LI JIAN RONG: "Enzymic Removal of Antinutritional Factors in Soybean" retrieved from STN Database accession no. 127:134966 XP002120646 & ZHONGGUO LIANGYOU XUEBAO, vol. 12, no. 2, 1997, pages 15-20,
- L.D.GRIFFITH: CEREAL CHEMISTRY., vol. 75, no. 1, 1998, pages 105-112, XP002120645 AMERICAN ASSOCIATION OF CEREAL CHEMISTS. MINNEAPOLIS., US ISSN: 0009-0352
- BELITZ; GROSCH: 'Food Chemistry', 1999, SPRINGER, GERMANY

## Description

### Field of the invention

This invention relates to cereal products foods which contain mixtures of cereals and legumes and which are substantially free of phytic acid. The cereal products are particularly suitable for use as weaning foods. The invention also relates to a process for producing the cereal products.

### Background to the invention

After an infant reaches the age of about 4 to 6 months, solid or semi-solid foods having high nutrient density are needed to meet the requirements of rapid growth. These solid or semi-solids foods are termed weaning foods. Further, the bioavailability of minerals and trace elements from weaning foods should be high to cover the infant's needs during rapid growth.

Weaning foods usually take the form of infant cereal products which contain one or more cereals and a protein source such as milk or legumes. Cereals and legumes contain phytic acid (*myo*-inositol 1,2,3,4,5,6-hexakisphosphate), a natural component and phosphorous storage form of the plant. Phytic acid binds strongly to minerals and trace elements such as Fe³⁺, Zn²⁺, Cu²⁺, and Mg²⁺ at the pH of the digestive tract. This makes the minerals and trace elements unavailable for absorption.

In cereals and legumes, phytic acid occurs mostly in the form of inositol-6-phosphate, which can be degraded to lower inostiol-phosphates or inositol during food processing by the enzyme phytase. This might improve mineral and trace element absorption. The enzymatic degradation of phytic acid may be done by using commercial phytase preparations; often obtained from micro-organisms such as *Aspergillus niger.*

It has recently been suggested that certain cereals such as rye, triticale, wheat and buckwheat may be potential sources of phytase (Egli, I., Davidsson, L., and Hurrell, R.F.; *Phytase Activity of Cereals, Pseudocereals and Legumes,* Poster, 1997). However, there is no suggestion that these phytase sources may be used in the production of weaning foods. Further, simpler procedures are needed to degrade phytic acid in the raw materials making up infant cereal products.

Therefore it is an object of this invention provide a cereal product which contain mixtures of cereals and legumes and which is substantially free of phytic acid.

### Summary of the invention

Accordingly, in one aspect, this invention provides an infant cereal product which comprises a gelatinised starch base, a legume as phytic acid containing protein source and a whole grain cereal flour or whole grain cereal which is an endogeneous phytase source.

The infant cereal product is preferably a weaning food which is in ready to eat form.

In a further aspect, this invention provides a process for preparing an infant cereal product which has reduced phytic acid content, the process comprising:-
incubating a mixture including a starch base, a legume as a phytic acid containing protein source and a whole grain cereal flour or whole grain cereal which is an endogeneous phytase source to reduce the phytic acid content of the mixture; and
heating the mixture to gelatinise the starch base and inactivate the endogeneous phytase.

### Detailed description of the preferred embodiments

Embodiments of the invention are now described by way of example only. This invention is based upon the discovery that certain whole grain cereals are endogeneous phytase sources which may, by their inclusion into the infant cereal product, degrade the phytic acid in the infant cereal product. The degradation may be complete.

Cereals which are endogeneous phytase sources may be readily determined by combining, in solution, a milled sample of the cereal with a phytic acid substrate and then measuring the liberation of inorganic phosphate. For example the whole grain cereal may be barley, buckwheat, wheat, triticale or rye. Preferably the whole grain cereal is in flour form.

The whole grain cereal preferably provides about 1% to about 20% by dry weight of the infant cereal product; for example about 5% to about 15% by weight. The exact amount used will depend upon the phytic acid content of the ingredients of the infant cereal product and the activity of the phytase. However, the amount may be readily determined for any particular application.

The starch base is be provided by starch containing cereal flours such as wheat flour, rice flour, corn flour, millet flour, oat flour, and sorghum flour. Alternative, the starch base may be in the form of potato starch or potato. Also, mixtures of these sources may be used.

The starch source preferably provides about 40% to about 80% by dry weight of the infant cereal product; for example about 50% to about 75% by weight.

The phytic acid containing protein source is a legume which provides a suitable source of protein. For example, the legume may be soy, mung bean, cow pea, chickpea, pea and lentil. The legume is preferably in the form of a flour or protein concentrate. Especially preferred is soy flour.

The legume provides 10% to 60% by dry weight of the infant cereal product; for example about 15% to about 30% by weight. The exact amount will be selected to provide the desired protein content; for example about 10% to about 20% by weight protein.

The infant cereal product may also contain, if desired, other suitable sources of protein such as non fat milk solids, whey and casein.

Further, infant cereal product may also contain a suitable lipid source. Suitable lipid sources include milk fat, corn oil, olive oil, sunflower oil, safflower oil, rape seed oil, coconut fat, palm oil, palm kernel oil, and fish oil.

To improve the organoleptic properties of the infant cereal product, the infant cereal product may contain sweeteners and suitable flavouring agents. Suitable sweeteners include sucrose, maltose, lactose, maltodextrin, and corn syrup solids. Further, artificial sweeteners such as saccharin, cyclamates, acetosulfame, sucralose, and L-aspartyl based sweeteners such as aspartame may be included if desired and permitted.

The infant cereal product is preferably fortified with minerals and vitamins to meet the needs of the infants. Suitable minerals include calcium, phosphorous, iodine, iron, magnesium, copper, zinc, manganese, chloride, potassium, sodium, selenium, chromium, and molybdenum. Suitable vitamins include vitamin A, vitamin B₁, vitamin B₂, vitamin B₆, vitamin B₁₂, vitamin E, vitamin K, vitamin C, vitamin D, folic acid, niacin, biotin, pantothenic acid, choline, and biotin. The levels of the vitamins and minerals may be selected as desired and in accordance with prevailing regulations for infant cereal products.

The infant cereal product may optionally contain other substances which may have a beneficial effect such as fibres, lactoferrin, nucleotides and nucleosides.

The infant cereal product may be produced by any suitable technique. An important step, however, is the incubation of the legume flour with the whole grain cereal flour to enable the endogeneous phytase to degrade the phytic acid. If the starch base contains phytic acid, the starch base is preferably also incubated with the whole grain cereal.

For optimum degradation of the phytic acid, the whole grain cereal flour, the legume flour, and the starch base are slurried in an aqueous liquid; preferably water. The temperature and pH of the slurry are preferably adjusted to values at which the phytase is optimally active. The temperature is preferably in the range of about 35°C to about 60°C; for example about 50°C to about 55°C. The pH is preferably in the range of about 4.5 to about 6.0; for example about 5.0 to about 5.6. If necessary, a suitable acid such as citric acid, tartaric acid, malic acid, hydrochloric acid, or the like, may be added to adjust the pH.

The slurry is incubated for a time sufficiently long to degrade the phytic acid to less than 0.1 µmol/g preferably completely. This time will vary depending upon the phytic acid content, type and amount of legume, the type and amount of whole grain cereal, the dry matter content of the slurry, the temperature, and the pH used. However, in any situation, the optimum time may be rapidly determined by simple experiment. Usually however, a time in the range of 60 minutes to about 200 minutes will be suitable.

The level to which the phytic acid is depleted is to less than 0.1 µmol/g.

After the slurry has been incubated, the slurry should be heat treated to gelatinise the starch base, inactivate any enzymes, and pasteurise the slurry. This may be done in any suitable manner.

For example, the slurry may be heated by the direct injection of steam or by using a suitable heat exchanger such as a scraped surface heat exchanger. Ordinarily, the temperature of the slurry is raised to above about 120°C for at least 2 seconds. Preferably the temperature is raised to above about 130°C for at least about 5 seconds. Thereafter, the slurry may be cooled; for example by flash cooling. The slurry may then be filled into containers, if a liquid cereal product is desired, or may be dried by means of spray-drying or roller drying. Roller drying is preferred since a flaked cereal product is obtained.

As another example, the slurry may be heat treated in an extrusion cooker. To improve the textural properties of the final product, a compressed gas is preferably injected into the extrusion cooker prior to the extrusion die. A suitable process is described in US patent 5,385,746.

If desired, the slurry may be subjected to further enzymatic treatment prior to being transformed into its final form. For example, the slurry may be incubated with an enzyme such as an amylase to break down starch in the starch base. This is preferably done after the slurry has been heat treated a first time to gelatinise the starch base and inactivate any enzymes. By breaking down the starch base, the viscosity of the weaning food reconstituted from the final product is more stable. Also, sugars are produced which improves the taste of the cereal product. The wettability of the cereal product may also be improved.

The infant cereal product may be used as a weaning food for infants by reconstituting it with water or milk or other suitable liquid. Because the cereal product has less than 0.1 µmol/g phytic acid or contains no phytic acid, the cereal product is able to provide a nutritionally density food having high bioavailability of minerals and trace elements. Therefore the cereal product is ideally suited to weaning infants.

### Example 1

A dry blend of 28 kg of wheat flour (type 550), 8 kg of soy flour and 4 kg of whole grain rye flour is prepared in a mixer. The dry blend has a protein content of about 15% by weight. An amount of 100 litres of water at 50°C is added to the dry blend under mixing. Citric acid is then added to adjust the pH to about 5.5. The resulting slurry is then incubated under mixing for 3 hours at 50°C. Samples of the slurry are taken at the start (time 0) and 20 minute intervals thereafter.

The incubated slurry is heated to 135°C for about 30 seconds using steam injection to inactivate any enzymes, pasteurise the slurry and gelatinise starch. The heated slurry is then flash cooled to a temperature of about 70°C. The cooled slurry is dried to flakes on a roller drier.

Immediately upon taking of any sample of the slurry, hydrochloric acid is added to the sample to terminate any enzymatic reactions and to extract any phytic acid present. The inositol phosphates (IP3, IP4, IP5, IP6) in the extract are determined according to the procedure of Sandberg and Ahderinne (*J*. *Food Sci*.; 54, 1986, 547-550) using HPLC analysis with refractive index detection. In a similar fashion, a sample of the flakes is extracted with hydrochloric acid and analysed for the different inositol phosphates.

The total inositol phosphate content of the samples is as follows:-

| **Sample** | **Total Inositol Phosphates / µmol/g** |
|---|---|
| time = 0 minutes | 5.31 |
| time = 20 minutes | 0.83 |
| time = 40 minutes | 0.16 |
| time = 60 minutes | 0.15 |
| time = 80 minutes | 0.12 |
| time = 100 minutes | not detectable |
| Flakes | not detectable |

The results indicate that the cereal product is virtually free of phytic acid.

### Example 2

A dry blend of 28 kg of wheat flour (type 550), 8 kg of soy flour and 4 kg of whole grain wheat flour is prepared in a mixer. The dry blend has a protein content of about 15% by weight. An amount of 100 litres of water at 50°C is added to the dry blend under mixing. Citric acid is then added to adjust the pH to about 5.1. The resulting slurry is then incubated for 3 hours at 50°C under mixing and then processed to flakes as described in example 1.

Further, samples of the slurry and flakes are taken and analysed for inositol phosphate content as described in example 1. The total inositol phosphate content of the samples is as follows:-

| **Sample** | **Total Inositol Phosphates / µmol/g** |
|---|---|
| time = 0 minutes | 6.08 |
| time = 20 minutes | 2.96 |
| time = 40 minutes | 0.19 |
| time = 60 minutes | 0.12 |
| time = 80 minutes | traces. |
| time = 100 minutes | traces. |
| Flakes | not detectable |

The results indicate that the cereal product is substantially devoid of phytic acid.

### Example 3

A study in humans was carried out. The aim of this study was to measure the influence of complete phytic acid degradation in an infant cereal product based on wheat and soybean on zinc and copper absorption in adults. The negative influence of phytic acid on iron absorption in adults and infants is well established in the literature. In contrast, the effect of phytic acid on zinc absorption has been contradictory and there is very limited information of the influence of phytic acid on copper absorption. *In vitro* studies suggest a strong interaction between phytic acid and copper, although until now this has not been confirmed in humans.

An infant cereal product with no phytic acid (< 0.1 µmol/g), produced with the technique described above (example 2), was compared with an infant cereal product containing the native phytic acid content (circa 6 µmol/g). Each study subject (seven premenopausal women and two men) was given the infant cereal product with no phytic acid and the infant cereal product with the native phytic acid content in a cross-over design, enabling each subject to act as her/his own control. Zinc and copper were labeled extrinsically with stable isotopes (⁷⁰Zn and ⁶⁵Cu) and apparent zinc and copper absorption was measured based on a fecal monitoring technique. Isotopic analysis was performed by thermal ionization mass spectrometry. Apparent fractional zinc and copper absorption was calculated based on fecal excretion of zinc and copper isotopic labels during six day fecal collection periods, indicated by brilliant blue. The completeness of the fecal collection was verified by the excretion of a non-absorbable fecal marker (dysprosium).

The mean apparent fractional zinc absorption was significantly higher (p = 0.005) from the infant cereal product with no phytic acid (34.6%, range 26.1-51.7%), than from the infant cereal product with the native phytic acid content (22.8%, range 10.4-32.3%). No significant difference (p = 0.167) was found for the mean apparent fractional copper absorption between the infant cereal product with no phytic acid (19.7%, range 11.0-26.3%) and the infant cereal product with the native phytic acid content (23.7%, range 15.5-42.3%).

The results clearly demonstrated a beneficial effect on zinc absorption after dephytinization of infant cereal products.

## Claims

1. An infant cereal product which comprises a gelatinised starch source, a legume seed as phytic acid containing protein source, and a whole grain cereal or whole grain cereal flour, which is an endogenous phytase-source, wherein the cereal product contains less than 0.1 µmol/g of phytic acid, wherein said starch source is selected from wheat flour, rice flour, corn flour, millet flour, oatu flour, sorghum flour, potato starch and potato; wherein said whole grain cereal or whole grain cereal flour is selected from barley, buckwheat, wheat, triticale and rye and wherein the legume provides 10% to 60% by dry weight of the infant cereal product.

2. An infant cereal product according to claim 1, wherein the mixture is incubated at a pH of about 4,5 to about 6,0.

3. An infant cereal product according to claim 1 to 2, in which the whole grain cereal flour is selected from one or more of barley flour, buckwheat flour, wheat flour, triticale flour and rye flour.

4. An infant cereal product according to claim 1 to 3, in which the phytic acid containing protein source is soy.

5. An infant cereal product according to claim 1 to 4, in which the whole grain cereal flour provides about 1% to about 20% by dry weight of the infant cereal product.

6. An infant cereal product according to claim 1 to 5, which have a protein content of about 10% to about 20% by weight.

7. A process for preparing an infant cereal product, wherein the phytic acid content is reduced to less than 0.1 µmol/g, the process comprising,
incubating a mixture comprising a starch source, a legume as phytic acid containing protein source and a whole grain cereal or a whole grain cereal flour, which is an endogenous phytase-source, as to reduce the phytic acid content of the mixture, and
heating the mixture to gelatinise the starch source and to inactivate the endogenous phytase,
wherein said starch source is selected from wheat flour, rice flour, corn flour, millet flour, oat flour, sorghum flour, potato starch and potato; wherein said whole grain cereal or whole grain cereal flour is selected from barley, buckwheat, wheat, triticale and rye and wherein the legume provides 10% to 60% by dry weight of the infant cereal product.

## Patentansprüche

1. Kinder-Getreideprodukt, welches eine Quelle für gelatinisierte Stärke, eine Hülsenfrucht als Phytinsäure enthaltende Proteinquelle, und ein Vollkorn-Getreide oder Vollkorn-Getreidemehl umfasst, welches eine Quelle für endogene Phytase ist, worin das Getreideprodukt weniger als 0,1 µmol/g Phytinsäure aufweist, worin die Stärkequelle ausgewählt ist unter Weizenmehl, Reismehl, Maismehl, Hirsemehl, Hafermehl, Sorghummehl, Kartoffelstärke und Kartoffel, worin das Vollkorn-Getreide oder Vollkorn-Getreidemehl ausgewählt ist unter Gerste, Buchweizen, Weizen, Triticale und Roggen, und worin die Hülsenfrucht 10 % bis 60 % des Kinder-Getreideproduktes, bezogen auf das Trockengewicht, liefert.

2. Kinder-Getreideprodukt nach Anspruch 1, worin das Gemisch bei einem pH-Wert von etwa 4,5 - 6,0 inkubiert wird.

3. Kinder-Getreideprodukt nach einem der Ansprüche 1 oder 2, worin das Vollkorn-Getreidemehl ausgewählt ist unter einem oder mehreren von Gerstenmehl, Buchweizenmehl, Weizenmehl, Triticalemehl und Roggenmehl.

4. Kinder-Getreideprodukt nach Anspruch 1 bis 3, worin die Phytinsäure enthaltende Proteinquelle Soja ist.

5. Kinder-Getreideprodukt nach Anspruch 1 bis 4, worin das Vollkorn-Getreidemehl etwa 1 % bis etwa 20 % des Kinder-Getreideproduktes, bezogen auf das Trockengewicht, liefert.

6. Kinder-Getreideprodukt nach Anspruch 1 bis 5, welches einen Proteingehalt von etwa 10 % bis etwa 20 %, bezogen auf das Gewicht, aufweist.

7. Verfahren zur Herstellung eines Kinder-Getreideproduktes, bei dem der Gehalt an Phytinsäure auf weniger als 0,1 µmol/g reduziert ist, umfassend,
Inkubieren eines Gemisches, umfassend eine Stärkequelle, eine Hülsenfrucht als Phytinsäure enthaltende Proteinquelle, und ein Vollkorn-Getreide oder ein Vollkorn-Getreidemehl, welches eine Quelle für endogene Phytase ist, um den Phytinsäure-Gehalt des Gemisches zu reduzieren, und
Erhitzen des Gemisches, um die Stärkequelle zu gelatinisieren und die endogene Phytase zu inaktivieren, wobei
die Stärkequelle ausgewählt ist unter Weizenmehl, Reismehl, Maismehl, Hirsemehl, Hafermehl, Sorghummehl, Kartoffelstärke und Kartoffel, worin das Vollkorn-Getreide oder Vollkorn-Getreidemehl ausgewählt ist unter Gerste, Buchweizen, Weizen, Triticale und Roggen, und wobei die Hülsenfrucht 10 % bis 60 % des Kinder-Getreideproduktes, bezogen auf das Trockengewicht, liefert.

## Revendications

1. Produit à base de céréales pour nourrissons, comprenant une source d'amidon gélatinisé, une légumineuse en tant que source de protéines contenant de l'acide phytique et une céréale complète ou une farine de céréale complète, qui est une source de phytase endogène, ledit produit à base de céréales contenant moins de 0,1 µmol/g d'acide phytique, dans lequel ladite source d'amidon est choisie parmi la farine de blé, la farine de riz, la farine de maïs, la farine de millet, la farine d'avoine, la farine de sorgho, la fécule de pomme de terre et la pomme de terre, dans lequel ladite céréale complète ou ladite farine de céréale complète est choisie parmi l'orge, le sarrasin, le blé, le triticale et le seigle, et dans lequel la légumineuse fournit de 10 % à 60 % en poids à sec du produit à base de céréales pour nourrissons.

2. Produit à base de céréales pour nourrissons selon la revendication 1, dans lequel le mélange est incubé à un pH d'environ 4,5 à environ 6,0.

3. Produit à base de céréales pour nourrissons selon la revendication 1 ou 2, dans lequel la farine de céréale complète est choisie parmi une ou plusieurs des farine d'orge, farine de sarrasin, farine de blé, farine de triticale et farine de seigle.

4. Produit à base de céréales pour nourrissons selon les revendications 1 à 3, dans lequel la source de protéines contenant de l'acide phytique est le soja.

5. Produit à base de céréales pour nourrissons selon les revendications 1 à 4, dans lequel la farine de céréale complète fournit environ 1 % à environ 20 % en poids à sec du produit à base de céréales pour nourrissons.

6. Produit à base de céréales pour nourrissons selon les revendications 1 à 5, qui a une teneur en protéines d'environ 10 % à environ 20 % en poids.

7. Procédé de préparation d'un produit à base de céréales pour nourrissons, dans lequel la teneur en acide phytique est réduite à moins de 0,1 µmol/g, ledit procédé comprenant les étapes consistant à :
faire incuber un mélange comprenant une source d'amidon, une légumineuse en tant que source de protéines contenant de l'acide phytique et une céréale complète ou une farine de céréale complète, qui est une source de phytase endogène, de façon à réduire la teneur en acide phytique du mélange et
chauffer le mélange pour gélatiniser la source d'amidon et pour inactiver la phytase endogène,
dans lequel ladite source d'amidon est choisie parmi la farine de blé, la farine de riz, la farine de maïs, la farine de millet, la farine d'avoine, la farine de sorgho, la fécule de pomme de terre et la pomme de terre ; dans lequel ladite céréale complète ou ladite farine de céréale complète est choisie parmi l'orge, le sarrasin, le blé, le triticale et le seigle, et dans lequel la légumineuse fournit de 10 % à 60 % en poids à sec du produit à base de céréale pour nourrissons.
